# EUROPÄISCHE PATENTSCHRIFT

(11) **EP 4 413 357 B1**
(45) Veröffentlichungstag und Bekanntmachung des Hinweises auf die Patenterteilung: **29.10.2025**
(21) Anmeldenummer: 22786033.5
(22) Anmeldetag: 22.09.2022
(51) Int. Cl.: G01N 22/00, G01N 27/22

(54) **VERFAHREN ZUR UNTERSCHEIDUNG ZWISCHEN DEM VORLIEGEN EINES FREMDKÖRPERS ODER EINER GASBLASE IN EINEM MEDIUM UND ENTSPRECHENDES SYSTEM**
METHOD FOR DISTINGUISHING BETWEEN THE PRESENCE OF A FOREIGN BODY OR A GAS BUBBLE IN A MEDIUM, AND CORRESPONDING SYSTEM
PROCÉDÉ DE DISTINCTION ENTRE LA PRÉSENCE D'UN CORPS ÉTRANGER OU D'UNE BULLE DE GAZ DANS UN MILIEU, ET SYSTÈME CORRESPONDANT

(30) Priorität: 08.10.2021 DE 102021126221
(43) Veröffentlichungstag der Anmeldung: 14.08.2024
(73) Patentinhaber: Endress+Hauser Flowtec AG, 4153 Reinach (CH)
(72) Erfinder: EBRAHIMI, Mohammad Sadegh, 79539 Lörrach (DE); FRÜHAUF, Dietmar, 79539 Lörrach (DE); FREY, Volker, 79650 Schopfheim (DE); KUHNEN, Raphael, 79418 Schliengen (DE); DRAHM, Wolfgang, 85354 Freising (DE); PFLÜGER, Stefan, 80995 München (DE); HABERMEHL, Anne, 85435 Erding (DE); ZHU, Hao, 85354 Freising (DE)
(74) Vertreter: Endress + Hauser Group Services (Deutschland) AG+Co. KG
(86) Internationale Anmeldenummer: PCT/EP2022/076335
(87) Internationale Veröffentlichungsnummer: WO 2023/057218

(56) Entgegenhaltungen:
- WO-A1-2021/181328
- WO-A1-91/16087
- JP-A- 2021 006 781
- US-B1- 6 456 093
- US-B1- 6 577 700

## Beschreibung

Die Erfindung betrifft ein Verfahren zur Unterscheidung zwischen dem Vorliegen eines Fremdkörpers oder einer Gasblase in einem Medium und ein entsprechendes System.

In der Prozessindustrie werden strömungsfähige Medien in Rohrleitungen geführt. Hierbei ist es in Bereichen mit besonders hohen hygienischen Anforderungen, bspw. in der Lebensmittel-verarbeitenden Industrie, wünschenswert, Fremdkörper möglichst frühzeitig und sicher zu erkennen, also bspw. vor oder bei dem Abfüllen in ein Behältnis. Der Begriff Fremdkörper umfasst dabei alle festen Materialien, die in dem Medium aus Sicherheits-und/oder Qualitätssicherungsgründen prinzipiell unerwünscht sind. Dabei handelt es sich bspw. um Glasscherben, Gräten, Knochensplitter, Plastik- und Gummistückchen, Kies/Stein usw., aber auch um unerwünschte feste Stückchen in einem ansonsten flüssigen bis zähflüssig-breiigen Medium.

Die EP 18 53 900 A1 beschreibt ein System und ein Verfahren zur Erkennung des Vorliegens von Fremdkörpern in einem Medium. Darin werden sowohl Mikrowellen als auch Ultraschallwellen von jeweils einer dazu ausgestalteten Aussendeeinheit als Aussendesignale in das Medium ausgesandt. Anhand einer Auswertung von Empfangssignalen wird das Auftreten von Änderungen in dem Medium, insb. das Vorliegen eines Fremdkörpers, festgestellt. Die in der EP 18 53 900 A1 vorgestellte Lösung gibt allerdings keine Möglichkeit an, einen Fremdkörper von einer Gasblase, zu unterscheiden. Im Gegensatz zu Fremdkörpern stellen Gasblasen eine unbedenkliche Änderung in dem Medium dar.

Aufgabe der Erfindung ist es daher, eine Möglichkeit anzugeben, um zwischen dem Vorliegen eines Fremdkörpers oder einer Gasblase in dem Medium unterscheiden zu können. Dies ist insbesondere anspruchsvoll, für den Fall, dass die Gasblase und der Fremdkörper von prinzipiell gleicher Größe sind.

Die Aufgabe wird gelöst durch ein Verfahren zur Unterscheidung zwischen dem Vorliegen eines Fremdkörpers oder einer Gasblase und ein System zur Unterscheidung zwischen dem Vorliegen eines Fremdkörpers oder einer Gasblase in einem strömungsfähigen Medium.

Bezüglich des Verfahrens wird die Aufgabe gelöst durch ein Verfahren zur Unterscheidung zwischen dem Vorliegen eines Fremdkörpers oder einer Gasblase in einem strömungsfähigen Medium in einer Rohrleitung oder einem Behältnis, umfassend die Schritte:
- Aussenden von Mikrowellen-Aussendesignalen in das Medium;
   - Einbringen von mechanischen Schwingungen in das Medium,
   - Empfangen von Mikrowellen-Empfangssignalen, welche das Medium durchlaufen haben;
   - Auswerten der Mikrowellen-Empfangssignale, wobei das Vorliegens eines Objekts, nämlich einer Gasblase oder eines Fremdkörpers, in dem Medium mittels der Mikrowellen-Empfangssignale oder einer daraus abgeleiteten Größe detektiert wird,
      wobei mittels der mechanischen Schwingungen eine im Medium vorhandene Gasblase zu Schwingungen angeregt wird und durch die schwingende Gasblase eine Modulation der Mikrowellen-Empfangssignale oder der daraus abgeleiteten Größe erzeugt wird,
   - Detektion einer Gasblase nur für den Fall, dass bei eingebrachter mechanischer Schwingungen die Mikrowellen-Empfangssignale oder die daraus abgeleitete Größe moduliert ist/sind und
- Detektion eines Fremdkörpers, andernfalls

Das Einbringen der mechanischen Schwingungen regt die Gasblase zu mechanischen Schwingungen an. Dadurch wird das empfangene Mikrowellensignal (bspw. sein zeitlicher Verlauf) moduliert. Mittels einer Auswertung bspw. eines zeitlichen Verlaufs des Mikrowellenempfangssignals, wird ermittelt, ob das empfangene Mikrowellensignal unter der mechanischen Anregung moduliert ist. Dies ist nur der Fall bei einer Gasblase. Dahingegen wird ein fester Fremdkörper durch die eingebrachten mechanischen Schwingungen im Wesentlichen nicht zu Schwingungen angeregt, bzw. zumindest nicht in dem Maße, als das dadurch Mikrowellen-Empfangssignale und/oder die dadurch abgeleitete Größe moduliert wäre/n. Mittels einer Auswertung, bspw. eines zeitlichen Verlaufs des Mikrowellenempfangssignals und/oder eines zeitlichen Verlaufs der aus dem Mikrowellenempfangssignal abgeleiteten Größe, ist zum einen erkennbar, ob überhaupt ein Objekt, also ein Fremdkörper oder eine Gasblase in dem Medium vorliegt. Zum anderen ist anhand des Vorliegens der Modulation oder nicht erkennbar, ob es sich bei dem Objekt um eine Gasblase oder einen Fremdkörper handelt.

Daher wird eine Möglichkeit angegeben, um zwischen Gasblasen und Fremdkörpern zu unterscheiden und somit falsch-positive Ergebnisse bei dem Erkennen des Vorliegens eines Fremdkörpers in dem Medium sicher auszuschließen.

In einer bevorzugten Ausgestaltung des Verfahrens umfasst dieses folgende Schritte, welche vor dem Schritt des Einbringens der mechanischen Schwingungen in das Medium durchgeführt werden,
- Aussenden von Mikrowellen-Aussendesignalen in das Medium;
- Empfangen von Mikrowellen-Empfangssignalen, welche das Medium durchlaufen haben;
- Auswerten der Mikrowellen-Empfangssignale, wobei das Vorliegens des Objekts mittels der Mikrowellen-Empfangssignale oder einer daraus abgeleiteten Größe detektiert wird.

In dieser Ausgestaltung wird also zunächst in einem vorangehenden Schritt mittels des Auswertens der Mikrowellen-Empfangssignale ermittelt, ob überhaupt ein Objekt in dem Medium vorliegt. Dies zunächst ohne Anregung zu mechanischen Schwingungen. Erst anschließend wird in dem erfindungsgemäßen zweiten Schritt ermittelt, ob es sich bei dem Objekt um einen Fremdkörper oder um einen Gasblase handelt, mittels der in das Medium eingebrachten mechanischen Schwingungen.

In einer Ausgestaltung der Erfindung handelt es sich bei der aus den Mikrowellen-Empfangssignalen abgeleiteten Größe um die Permittivität des Mediums. Die Permittivität wird im Stand der Technik auch als dielektrische Leitfähigkeit oder Dielektrizitätskonstante bezeichnet. Das Vorhandensein des Objekts wird bspw. also zunächst anhand einer Auswertung eines zeitlichen Verlaufs der Permittivität des Mediums ermittelt. Falls die Permittivität unter Anregen des Objekts zu mechanischen Schwingungen moduliert ist, handelt es sich um eine schwingende Gasblase. Alternativ eignen sich selbstverständlich weitere aus den Mikrowellen-Empfangssignalen ableitbare, typische Größen, darunter bspw. eine Laufzeit, eine Dämpfung, eine Phasenverschiebung etc. Ggf. lässt sich die Permittivität auch selbst aus diesen Größen ermittelen.

In einer Ausgestaltung der Erfindung umfasst der Schritt des Auswertens der Mikrowellen-Empfangssignale und des Detektierens des Vorliegens des Objekts in dem Medium auch das Ermitteln einer Größe des Objekts. Anhand des zeitlichen Verlaufs der Permittivität lässt sich bspw. eine Größe (selbstverständlich inbegriffen einer gewissen Schwankungsbreite) des Objekts abschätzen.

In einer Weiterbildung der letztgenannten Ausgestaltung wird eine Anregefrequenz der eingebrachten mechanischen Schwingungen in Abhängigkeit von der ermittelten Größe des Objekts gewählt.

In einer weiteren Weiterbildung der vorstehenden Ausgestaltung wird zumindest anhand der Größe des Objekts eine Resonanzfrequenz ermittelt, bei welcher Resonanzfrequenz die Gasblasen zu resonanten Schwingungen angeregt werden, und wobei als Anregefrequenz die Resonanzfrequenz gewählt wird.

In dieser Weiterbildung werden also die Gasblasen in resonante mechanische Schwingungen versetzt. Das "Ermitteln der Resonanzfrequenz zumindest anhand der Größe" umfasst dabei das Ermitteln eines vorläufigen Wertes der Resonanzfrequenz anhand der Größe mit einer Schwankungsbreite, d.h. innerhalb eines ermittelten Frequenzbands. Das Frequenzband wird dann, bspw. mittels eines Frequenz-Sweeps, durchfahren, um die Resonanzfrequenz zur Anregung in Resonanz zu ermitteln und/oder die tatsächliche Resonanzfrequenz wird erst durch einen rückgekoppelten Regelungskreis eingestellt.

In einer Ausgestaltung des Verfahrens erfolgt das Einbringen der mechanischen Schwingungen in das Medium mittels des Einbringens von Ultraschallwellen. Hierzu umfasst ein entsprechendes System, das zum Ausführen des erfindungsgemäßen Verfahrens ausgestaltet ist, eine entsprechend ausgebildete Ultraschallaussendeeinheit.

Bezüglich des Systems zur Unterscheidung zwischen dem Vorliegen eines Fremdkörpers oder einer Gasblase in einem strömungsfähigen Medium wird die Aufgabe gelöst durch ein System zur Unterscheidung zwischen dem Vorliegen eines Fremdkörpers oder einer Gasblase in einem strömungsfähigen Medium in einer Rohrleitung oder einem Behältnis, wobei das System zum Ausführen des erfindungsgemäßen Verfahrens ausgebildet ist, umfassend:
- Zumindest eine Mikrowellen-Aussendeeinheit, die zum Aussenden von Mikrowellen-Aussendesignalen in das Medium ausgestaltet ist;
- Zumindest eine Mikrowellen-Empfangseinheit, die zum Empfang von Mikrowellen-Empfangssignalen, welche das Medium durchlaufen haben, ausgestaltet ist,
- eine Ultraschallaussendeeinheit, die zum Einbringen von Ultraschallwellen in das Medium ausgestaltet ist,
- und eine Regel-/Auswerteeinheit, die dazu eingerichtet ist, anhand des Auswerten der Mikrowellen-Empfangssignale zwischen dem Vorliegen eines Fremdkörpers oder einer Gasblase in dem Medium zu unterscheiden.

Die Mikrowellen-Aussendeeinheit und die Mikrowellen-Empfangseinheit können dabei auch als eine einzige, kombinierte Aussende-/Empfangseinheit ausgebildet sein. Die Regel-/Auswerteeinheit zur Auswertung der Mikrowellen-Empfangssignale kann auch dazu ausgestaltet sein, wie vorstehend erwähnt die Schwingungen der Gasblasen auf eine resonante Schwingung zu regeln. Alternativ kann zur Regelung der Schwingungen der Gasblasen in Resonanz auch eine weitere Regel-/Auswerteeinheit vorgesehen sein.

Die Erfindung wird anhand der nachfolgenden, nicht maßstabsgetreuen Figuren näher erläutert, wobei gleiche Bezugszeichen gleiche Merkmale bezeichnen. Wenn es die Übersichtlichkeit erfordert oder es anderweitig sinnvoll erscheint, wird auf bereits erwähnte Bezugszeichen in nachfolgenden Figuren verzichtet.

Es zeigen:
Fig. 1: Ein Flussdiagramm des erfindungsgemäßen Verfahrens in einer bevorzugten Ausgestaltung des erfindungsgemäßen Verfahrens;
Fig 2a, 2b, 2c: Schematische Ansichten eines zeitlichen Verlaufs der Permittivität für unterschiedliche Fälle;
Fig 3: Eine schematische Ansicht einer Ausgestaltung eines erfindungsgemäßen Systems.

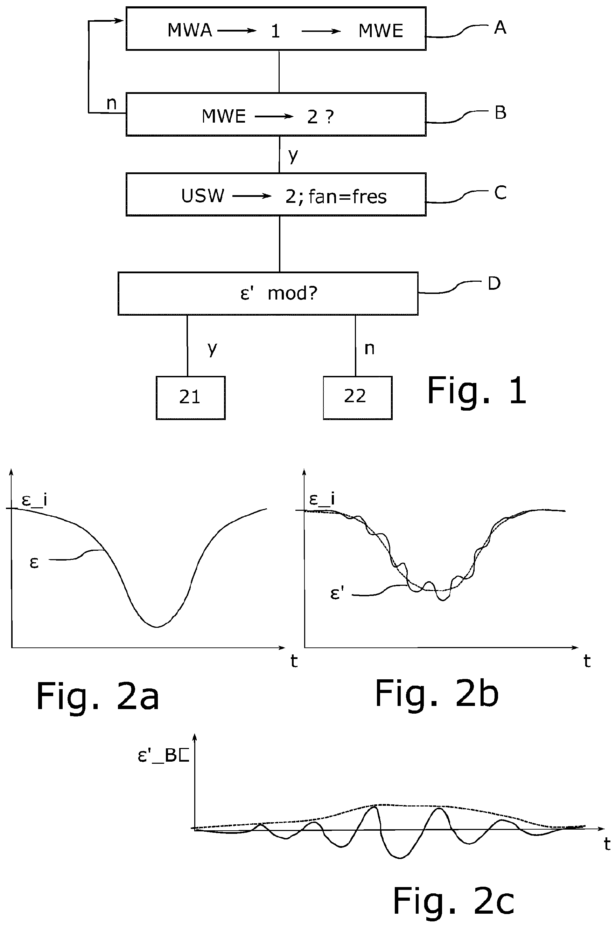

In Fig. 1 werden in einer Ausgestaltung des erfindungsgemäßen Verfahrens in einem ersten Schritt A) Mikrowellen-Aussendesignale MWA in das Medium 1 ausgesandt. Dies in einer bevorzugten Ausgestaltung zunächst, ohne dass gleichzeitig Ultraschallwellen USW ausgesandt werden, d.h. ohne, dass eine gleichzeitige Anregung von mechanischen Schwingungen von ggf. im Medium 1 vorhanden Gasblasen 21 mittels der Ultraschallwellen USW stattfände.

Der Frequenzbereich für die Mikrowelle liegt insbesondere zwischen 3 MHz bis 10 GHz, bevorzugt zwischen 1 GHz bis 3GHz.

Anschließend werden in einem Schritt B) Mikrowellen-Empfangssignale MWE von einer Regel-/Auswerteeinheit 5 empfangen und verarbeitet. Anhand der Mikrowellen-Empfangssignale MWE wird zunächst ermittelt, ob überhaupt ein Objekt 2 in dem Medium 1 vorliegt. Ist dies der Fall, siehe Strich "y" nach Schritt B), wird anschließend Schritt C) durchgeführt. Falls nicht, siehe Strich "n" nach Schritt B), wird Schritt A) wiederholt, um ein späteres Auftauchen eines Objekts 2 in dem ggf. strömenden Medium 1 erneut zu überwachen.

Das Auftauchen des Objekts 2 lässt sich an einer aus den Mikrowellen-Empfangssignalen MWE ableitbaren Größe bestimmen, bspw. aus einem zeitlichen Verlauf der Permittivität epsilon. Dies ist in Fig. 2a, durchgezogene Linie, angedeutet. Hier ist die Permittivität epsilon als Funktion der Zeit dargestellt. Die Permittivität epsilon wird hierzu bspw. als eine ortsabhängige Funktion ermittelt und anhand einer bekannten und/oder ermittelten Fließgeschwindigkeit des Mediums 1 in eine zeitabhängige Funktion umgerechnet. Zum Ermitteln der Fließgeschwindigkeit kann das System - unabhängig von der jeweiligen Ausgestaltung - noch ein hierzu ausgestaltetes Durchflussmessgerät umfassen (hier nicht dargestellt). Selbstverständlich ist es auch möglich, direkt eine ortsabhängige Funktion zu analysieren. Eine Speicherung des zeitlichen Verlaufs der Permittivität epsilon erfolgt dabei bspw. in einer Speichereinheit, die mit der Regel-/Auswerteeinheit 5 assoziiert oder zumindest damit verbunden ist.

Durch das Auftauchen des Objekts 2 in dem Medium 1 erniedrigt sich in dem zeitlichen Verlauf die Permittivität epsilon in einem umgedrehten Peak auf ein lokales Minimum (siehe Fig. 2a), ausgehend von einer anfänglichen Permittivität epsilon_i des Mediums 1, um dann anschließend wieder auf die anfängliche Permittivität epsilon_i anzusteigen. Für den Fall eines im Wesentlichen wasserbasierten Mediums 1 weist dieses bspw. ohne Objekt eine Permittivität epsilon_i von ca. 80 auf, wohingegen ein Fremdkörper 22 (je nachdem, aus welchem Material er besteht) typischerweise eine Permittivität epsilon im Bereich zwischen 2 bis 8 aufweist. Dies liegt in ähnlichen Bereichen wie die Permittivität epsilon einer Gasblase 21, wodurch das Unterscheiden zwischen einer Gasblase 21 und einem Fremdkörper 22, allein aufgrund der Beobachtung des zeitlichen Verlaufs der Permittivität epsilon ohne weitere Maßnahmen nicht immer möglich ist.

Das erfindungsgemäße Verfahren löst dies, indem in einem (hier anschließenden) Schritt C) aus Fig. 1 mittels des Aussendens von Ultraschallwellen USW (und ggf. auch des Empfangens) mechanische Schwingungen in das Medium 1 eingebracht werden.

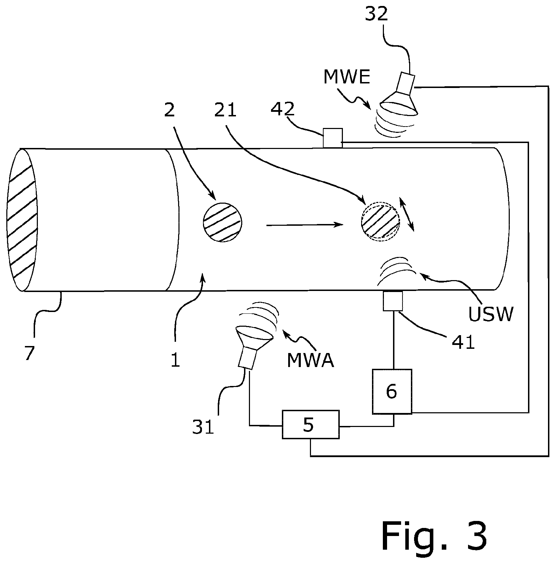

Für den Fall, dass es sich bei dem Objekt 2 um eine Gasblase 21 handelt, wird diese durch die Ultraschallwellen USW zu mechanischen Schwingungen angeregt. Die schwingende Gasblase 21 in einer Rohrleitung 7 ist in der nachstehend erläuterten Fig. 3 näher dargestellt.

Die Anregung in Schritt C) mittels der Ultraschallwellen USW geschieht bevorzugt in Resonanz, wobei die Resonanzfrequenz fres als Anregefrequenz fan zunächst anhand der Größe des Objekts 2 grob bestimmt wird. Die Größe des Objekts 2 kann dabei zuvor ermittelt oder geschätzt werden. Bspw. ist anhand der Breite des umgedrehten Peaks aus Fig. 2a die Länge des Objekts 2 (d.h. Ausdehnung des Objekts 2 entlang einer vorhergesehenen Strömungsrichtung) erkennbar, und anhand der Höhe des umgedrehten Peaks aus Fig. 2a die Breite (d.h. Ausdehnung des Objekts 2 entlang einer vorhergesehenen Strömungsrichtung) erkennbar. Ggf. kann alternativ die Größe des Objekt 2 auch im Vorhinein abgeschätzt werden, bspw. anhand einer Vorauswahl des Anwenders aufgrund der Kenntnis typischer Größen des Objekts 2 in dem jeweiligen Medium 1.

Anschließend wird versucht, das Objekt 2 mittels eines rückgeregelten Regelungskreises in resonante Schwingung zu versetzen. Handelt es sich bei dem Objekt 2 um keine Gasblase 21, ist ggf. eine Anregung in Resonanz ggf. gar nicht möglich. In diesen Fall kann die Regelung z.B. an einen Anschlag fahren und die erste Regel-/Auswerteeinheit 5 kann ggf. eine Meldung "Anregung in Resonanz nicht möglich" erzeugen.

"Mechanische Resonanz" bedeutet hier, dass die Gasblase 21 selbst resonante, mechanische Schwingungen vollzieht (bspw. periodisches Stauchen der Gasblase 21). Hierfür könne die Ultraschallwellen USW selbst in Resonanz sein, müssen dies aber nicht unbedingt, letzteres bspw. im Falle einer Anregung mit einer gepulsten Ultraschallwelle.

In einem Schritt D) wird dann wieder mittels ausgesandter Mikrowellen-Aussendesignale MWA und empfangener Mikrowellen-Empfangssignale MWE erneut die Permittivität epsilon' erfasst und aufgezeichnet, diesmal unter gleichzeitiger Anregung mit Ultraschallwellen USW.

Der zeitliche Verlauf der Permittivität epsilon' unter Anregung mit Ultraschallwellen USW ist in Fig. 2b dargestellt, wobei die durchgezogene Linie den Fall einer Gasblase 21 zeigt. Dieser ist ähnlich zu dem bereits in Fig. 2a gezeigten Verlauf, nur dass zusätzlich durch die Schwingung der Gasblase 21 eine Modulation der Permittivität epsilon' vorliegt, hier um eine als gestrichelte Hilfslinie gezeichnete Linie. Dahingegen entspräche bei einem Fremdkörper 22 der zeitliche Verlauf der Permittivität epsilon' auch unter Anregung mit Ultraschallwellen USW im Wesentlichen dem in Fig. 2a gezeigten Verlauf, d.h. keine Modulation zeigen. Dies, da der Fremdkörper 22 nicht im gleichen Maße zu mechanischen Schwingungen anregbar ist wie die Gasblase 21. Der zeitliche Verlauf der Permittivität epsilon' unter Anregung mit Ultraschallwellen USW wird daher im Hinblick darauf analysiert, ob eine Modulation der Permittivität epsilon' vorliegt oder nicht.

Dabei kann der zeitliche Verlauf der Permittivität epsilon ohne Anregung mit derselben Mikrowellen-Aussendeeinheit 31 und Mikrowellen-Empfangseinheit 32 erstellt werden wie der zeitliche Verlauf der Permittivität epsilon' mit Anregung. Ggf. können auch zwei separate Mikrowellen-Aussendeeinheiten 31,33 und Mikrowellen-Empfangseinheiten 32,34 vorgesehen sein (in Fig. 3 nicht gezeigt). Unabhängig von der Ausgestaltung sollte jedoch sichergestellt werden, mittels des gesamten Systems dasselbe Objekt 2 zu erfassen, dies hängt von der jeweiligen Trägheit des Messsystems bzw. der Messgeschwindigkeit und der maximal zulässigen Fließgeschwindigkeit ab.

Der Nachweis, ob eine Gasblase 21 vorliegt, erfolgt anhand der Analyse des zeitlichen Verlaufs aus Fig. 2b. Nur für den Fall, dass es sich bei dem Objekt 2 tatsächlich um eine Gasblase 21 handelt, ist die Permittivität epsilon' moduliert. Für einen verbesserten Nachweis des Vorliegens der Modulation wird bspw. ein Bandpassfilter auf den zeitlichen Verlauf aus Fig. 2b gelegt, wobei bevorzugt als Frequenz des Bandpassfilters die bekannte Anregefrequenz fan der Ultraschallwellen USW gewählt wird.

Der zeitliche Verlauf unter Anwendung des Bandpassfilters epsilon'_BP ist in Fig. 2c näher dargestellt. Hierfür ist als Einhüllende eine gestrichelte Hilfslinie dargestellt. Bspw. wird anhand eines insb. in der Regel-/Auswerteeinheit 5 hinterlegten Grenzwerts für die Einhüllende festgestellt, ob eine ausreichend große Modulation, wie sie durch eine Gasblase 21 verursacht würde, vorliegt oder nicht. Wird der hinterlegte Grenzwert überschritten, liegt Modulation vor, ansonsten nicht. Der Grenzwert kann bspw. durch Erfahrungswerte und/oder mathematische Modelle, insb. Schwingungsgleichungen abgeschätzt werden, und/oder durch entsprechende Versuche ermittelt werden.

Wird eine derartige, messbare Modulation festgestellt, ist davon auszugehen, dass es sich bei dem Objekt 2 um eine Gasblase 21 handelt, siehe Strich "y" nach Schritt D). Wird hingegen keine derartige Modulation festgestellt, wird ein Fremdkörper 22 in dem Medium 1 detektiert, siehe Strich "n" nach Schritt D). Ggf. kann auch zusätzlich ein Vergleich der beiden Verläufe der Permittivität epsilon (ohne Anregung mit Ultraschallwellen USW) und der Permittivität epsilon' (mit Anregung mit Ultraschallwellen USW) erfolgen. Anschließend wird bspw. eine Meldung "Modulation liegt vor" erzeugt, insb. von der Regel-/Auswerteeinheit 5, und/oder "Gasblase 21 und kein Fremdkörper 22 liegt vor". Wird keine Modulation festgestellt, wird bspw. eine entsprechende Meldung in der Regel-/Auswerteeinheit 5 erzeugt z.B. "Keine Modulation liegt vor" und/oder "Fremdkörper 22 und keine Gasblase 21 liegt vor".

Auf diese Art ist mittels des erfindungsgemäßen Verfahrens eine sichere Möglichkeit vorgestellt, um Gasblasen 21 von Fremdkörpern 22 in einem Medium 1 zu unterscheiden.

In der Figurenbeschreibung wurde nur die Ausgestaltung des erfindungsgemäßen Verfahrens erläutert, bei der Mikrowellen-Empfangssignale MWE zweimal ausgewertet werden, einmal mit Anregung mit Ultraschallwellen USW in Schritt C) und einmal in einem vorangehenden Schritt, ohne Anregung mit Ultraschallwellen USW in Schritt B).

Tatsächlich ist Schritt B) im Rahmen der Erfindung nicht zwingend notwendig, da sowohl der Nachweis des Vorliegens des Objekts 2 als auch das Unterscheiden zwischen Gasblase 21 und Fremdkörper 22 allein auf Basis von Schritt C) und D) durchführbar sind, bspw. anhand einer Analyse des in Fig 2b und Fig. 2c gezeigten zeitlichen Verlaufs. Aus Fig. 2b ist sowohl erkennbar, dass ein Objekt 2 vorliegt (durch das lokale Minimum), als auch, dass es sich bei dem Objekt 2 um eine Gasblase 21 handelt (durch die Modulation).

Das erfindungsgemäße Verfahren wurde ferner ausschließlich anhand der Permittivität epsilon erläutert; wie vorstehend erwähnt eignen sich auch weitere aus den Mikrowellen-Empfangssignalen MWE ableitbare Größen, darunter die vorstehend aufgezählten Beispiele, welche mutatis mutandis von dem erfindungsgemäßen Verfahren selbstverständlich mit umfasst sind.

Fig. 3 zeigt noch einmal näher ein erfindungsgemäßes Messsystem in einer Ausgestaltung der Erfindung. Hierbei ist ein Abschnitt einer Rohrleitung 7 dargestellt, durch das das Medium 1 strömt, bspw. eine Rohrleitung 7 in einer lebensmittel-verarbeitenden Abfüllanlage.

Eine Mikrowellen-Aussendeeinheit 31 und eine Mikrowellen-Empfangseinheit 32 sind außerhalb der Rohrleitung 7 angebracht und dazu ausgestaltet, die Mikrowellen-Aussendesignale MWA in das Medium 1 auszusenden bzw. die Mikrowellen-Empfangssignale MWE nach dem Durchlaufen durch das Medium 1 zu empfangen. Die Mikrowellen-Aussendeeinheit 31 und die Mikrowellen-Empfangseinheit 32 sind mit der Regel-/Auswerteeinheit 5 mittels einer Kommunikationsverbindung verbunden. Wie vorstehend erwähnt kann das System auch - je nach Ausgestaltung mehrere Mikrowellen-Aussendeeinheiten 31,33 und Mikrowellen-Empfangseinheiten 32,34 umfassen.

Ferner umfasst das Messsystem eine Ultraschallaussendeeinheit 41 und eine Ultraschallempfangseinheit 42. Für den Fall, dass es sich bei dem Objekt 2 um eine Gasblase 21 handelt, wird die Gasblase 21 durch die Ultraschallwellen USW in Schwingungen versetzt, durch welche wie vorstehend erwähnt die Mikrowellen-Empfangssignale MWE bzw. die daraus abgeleitet Permittivität epsilon' moduliert ist/sind. Zur Regelung der Ultraschallwellen USW derart, dass die Gasblase 21 in mechanischer Resonanz angeregt wird, umfasst das Messsystem bpsw. eine eigene, zweite Regel-/Auswerteeinheit 6. Selbstverständlich kann die Regelung in mechanischer Resonanz auch mittels der ersten Regel-/Auswerteeinheit 5 erfolgen, so dass nur eine einzige Regel-/Auswerteeinheit 5 von dem Messsystem umfasst ist.

Bei den Regel-/Auswerteeinheiten 5,6 handelt es sich bspw. um eine übergeordnete Steuerungseinheit, bspw. ein Prozessleitsystem mit einem Rechner oder um eine speicherprogrammierte Steuerungseinheit (SPS), oder aber auch um eine Transmittereinheit eines Mikrowellen-Messgeräts und/oder eine Transmittereinheit eines Ultraschallmessgeräts.

Bei den Kommunikationsverbindungen handelt es sich jeweils bspw. um eine drahtgebundene Kommunikationsverbindung bspw. um eine analoge Messübertragungsstrecke, insb. nach dem 4-20mA Standard, oder um einen drahtgebundenen Feldbus der Automatisierungstechnik, bspw. Foundation Fieldbus, Profibus PA, Profibus DP, HART, CANBus. Es kann sich aber auch um eine Kommunikationsverbindung eines modernen industriellen Kommunikationsnetzwerks, bspw. einen "Industrial Ethernet"-Feldbus, insbesondere Profinet, HART-IP oder Ethemet/IP oder eines aus dem Kommunikationsbereich bekanntes Kommunikationsnetzwerk, bspw. Ethernet nach dem TCP/IP-Protokoll, handeln.

Für den Fall, dass die Kommunikationsverbindung drahtlos ist, kann es sich zum Beispiel um ein Bluetooth, ZigBee-, WLAN-, GSM-, LTE-, UMTS-Kommunikationsnetzwerk oder aber auch eine drahtlose Version eines Feldbusses, insbesondere 802.15.4 basierte Standards wie WirelessHART handeln.

### Bezugszeichen und Symbole

- 1: Medium
- 2: Objekt
- 21: Gasblase
- 22: Fremdkörper
- 31: Mikrowellen-Aussendeeinheit
- 32: Mikrowellen-Empfangseinheit
- 41: Ultraschallaussendeeinheit
- 42: Ultraschallempfangseinheit
- 5: Regel-/Auswerteeinheit
- 6: Regel-/Auswerteeinheit
- 7: Rohrleitung

- MWE: Mikrowellen-Empfangssignale
- MWA: Mikrowellen-Aussendesignale
- Epsilon: Permittivität
- fan: Anregefrequenz
- fres: Resonanzfrequenz
- USW: Ultraschallwellen

## Patentansprüche

1. Verfahren zur Unterscheidung zwischen dem Vorliegen eines Fremdkörpers oder einer Gasblase in einem strömungsfähigen Medium (1) in einer Rohrleitung oder einem Behältnis, umfassend die Schritte:
- Aussenden von Mikrowellen-Aussendesignalen (MWA) in das Medium (1);
- Einbringen von mechanischen Schwingungen in das Medium (1),
- Empfangen von Mikrowellen-Empfangssignalen (MWE), welche das Medium (1) durchlaufen haben;
- Auswerten der Mikrowellen-Empfangssignale (MWE), wobei das Vorliegens eines Objekts (2), nämlich einer Gasblase (21) oder eines Fremdkörpers (22), in dem Medium (1) mittels der Mikrowellen-Empfangssignale (MWE) oder einer daraus abgeleiteten Größe (epsilon,...) detektiert wird,
und wobei mittels der mechanischen Schwingungen eine im Medium (1) vorhandene Gasblase (21) zu Schwingungen angeregt wird und durch die schwingende Gasblase (21) eine Modulation der Mikrowellen-Empfangssignale (MWE) oder der daraus abgeleiteten Größe (epsilon,...) erzeugt wird,
- Detektion einer Gasblase (21) nur für den Fall, dass bei eingebrachter mechanischer Schwingungen die Mikrowellen-Empfangssignale (MWE) oder die daraus abgeleitete Größe (epsilon,...) moduliert ist/sind und
- Detektion eines Fremdkörpers (22), andernfalls.

2. Verfahren nach Anspruch 1, wobei es sich bei der aus den Mikrowellen-Empfangssignalen (MWE) abgeleiteten Größe um die Permittivität (epsilon) des Mediums handelt.

3. Verfahren nach Anspruch 1 oder 2, umfassend folgende Schritte, welche vor dem Schritt des Einbringens der mechanischen Schwingungen in das Medium (1) durchgeführt werden,
- Aussenden von Mikrowellen-Aussendesignalen (MWA) in das Medium (1);
- Empfangen von Mikrowellen-Empfangssignalen (MWE), welche das Medium (1) durchlaufen haben;
- Auswerten der Mikrowellen-Empfangssignale (MWE), wobei das Vorliegens des Objekts (2) mittels der Mikrowellen-Empfangssignale (MWE) oder einer daraus abgeleiteten Größe (epsilon,...) detektiert wird.

4. Verfahren nach Anspruch 3, wobei der Schritt des Auswertens der Mikrowellen-Empfangssignale (MWE) und des Detektierens des Vorliegens des Objekts (2) in dem Medium (1) umfasst:
- Ermitteln einer Größe des Objekts (2).

5. Verfahren nach Anspruch 4, wobei eine Anregefrequenz (fan) der eingebrachten mechanischen Schwingungen in Abhängigkeit von der ermittelten Größe des Objekts (2) gewählt wird.

6. Verfahren nach Anspruch 5, wobei zumindest anhand der Größe des Objekts (2) eine Resonanzfrequenz (fres) ermittelt wird, bei welcher Resonanzfrequenz (fres) die Gasblasen (21) zu resonanten Schwingungen angeregt werden, und wobei als Anregefrequenz (fan) die Resonanzfrequenz (fres) gewählt wird.

7. Verfahren nach zumindest einem der vorherigen Ansprüche, wobei das Einbringen der mechanischen Schwingungen in das Medium (1) mittels des Einbringens von Ultraschallwellen (USW) erfolgt.

8. System zur Unterscheidung zwischen dem Vorliegen eines Fremdkörpers oder einer Gasblase in einem strömungsfähigen Medium (1) in einer Rohrleitung oder einem Behältnis, wobei das System zum Ausführen des Verfahrens nach zumindest einem der Ansprüche 1 bis 7 ausgebildet ist, umfassend:
- Zumindest eine Mikrowellen-Aussendeeinheit (31), die zum Aussenden von Mikrowellen-Aussendesignalen (MWA) in das Medium (1) ausgestaltet ist;
- Zumindest eine Mikrowellen-Empfangseinheit (32), die zum Empfang von Mikrowellen-Empfangssignalen (MWE), welche das Medium (1) durchlaufen haben, ausgestaltet ist,
- eine Ultraschallaussendeeinheit (4), die zum Einbringen von Ultraschallwellen (USW) in das Medium (1) ausgestaltet ist,
- und eine Regel-/Auswerteeinheit (5), die dazu eingerichtet ist, anhand des Auswerten der Mikrowellen-Empfangssignale (MWE) zwischen dem Vorliegen einer Gasblase (21) oder eines Fremdkörpers (22) in dem Medium (1) zu unterscheiden.

## Claims

1. A method for distinguishing between the presence of a foreign object or a gas bubble in a flowable medium (1) in a pipeline or a container, comprising the following steps:
- Transmitting microwave transmitted signals (MWA) into the medium (1);
- Inducing mechanical oscillations in the medium (1),
- Receiving microwave received signals (MWE) which have passed through the medium (1);
- Analyzing the microwave received signals (MWE), wherein the presence of an object (2), that is to say a gas bubble (21) or a foreign object (22), in the medium (1) is detected by means of the microwave received signals (MWE) or a variable (epsilon,...) derived therefrom,
and wherein a gas bubble (21) present in the medium (1) is caused to oscillate by means of the mechanical oscillations, and the oscillating gas bubble (21) effects a modulation of the microwave received signals (MWE) or the variable (epsilon,...) derived therefrom,
- Detecting a gas bubble (21) only for the case that, when mechanical oscillations are induced, the microwave received signals (MWE) or the variable (epsilon,...) derived therefrom is/are modulated, and
- - Detecting a foreign object (22), in the other cases.

2. The method as claimed in claim 1, wherein the variable derived from the microwave received signals (MWE) is the permittivity (epsilon) of the medium.

3. The method as claimed in claim 1 or 2, comprising the following steps which are carried out before the step of inducing the mechanical oscillations in the medium (1),
- Transmitting microwave transmitted signals (MWA) into the medium (1);
- Receiving microwave received signals (MWE) which have passed through the medium (1);
- Analyzing the microwave received signals (MWE), wherein the presence of the object (2) is detected by means of the microwave received signals (MWE) or a variable (epsilon,...) derived therefrom.

4. The method as claimed in claim 3, wherein the step of analyzing the microwave received signals (MWE) and detecting the presence of the object (2) in the medium (1) comprises:
- Establishing a variable of the object (2).

5. The method as claimed in claim 4, wherein an excitation frequency (fan) of the induced mechanical oscillations is selected as a function of the established variable of the object (2).

6. The method as claimed in claim 5, wherein a resonant frequency (fres) is established based on the variable of the object (2) as a minimum, at which resonant frequency (fres) resonant oscillations are generated in the gas bubbles (21), and wherein the resonant frequency (fres) is selected as the excitation frequency (fan).

7. The method as claimed in at least one of the preceding claims, wherein the mechanical oscillations are induced in the medium (1) by inducing ultrasonic waves (USW).

8. A system for distinguishing between the presence of a foreign object or a gas bubble in a flowable medium (1) in a pipeline or a container, wherein the system for carrying out the method is configured as claimed in at least one of claims 1 to 7, comprising:
- At least one microwave transmitter unit (31) which is configured to transmit microwave transmitted signals (MWA) into the medium (1);
- At least one microwave receiver unit (32) which is configured to receive microwave received signals (MWE) which have passed through the medium (1);
- An ultrasonic transmitter unit (4) which is configured to induce ultrasonic waves (USW) in the medium (1),
- and a control/evaluation unit (5) which is configured to distinguish between the presence of a gas bubble (21) or a foreign object (22) in the medium (1) based on the analysis of the microwave received signals (MWE).

## Revendications

1. Procédé destiné à la distinction entre la présence d'un corps étranger ou d'une bulle de gaz dans un produit fluide (1) s'écoulant dans une conduite ou un réservoir, lequel procédé comprend les étapes suivantes :
- Émission de signaux d'émission de micro-ondes (MWA) dans le produit (1) ;
- Introduction de vibrations mécaniques dans le produit (1),
- Réception de signaux de réception de micro-ondes (MWE) qui ont traversé le produit (1) ;
- Évaluation des signaux de réception de micro-ondes (MWE), la présence d'un objet (2), à savoir une bulle de gaz (21) ou un corps étranger (22), étant détectée dans le produit (1) au moyen des signaux de réception de micro-ondes (MWE) ou d'une grandeur (epsilon, ...) qui en est dérivée,
et une bulle de gaz (21) présente dans le produit (1) étant excitée en vibrations au moyen des vibrations mécaniques et une modulation des signaux de réception de micro-ondes (MWE) ou de la grandeur (epsilon, ...) qui en est dérivée étant produite par la bulle de gaz (21) vibrante,
- Détection d'une bulle de gaz (21) uniquement dans le cas où, lors de l'introduction de vibrations mécaniques, les signaux de réception de micro-ondes (MWE) ou la grandeur (epsilon,...) qui en est dérivée est/sont modulés et
- Détection d'un corps étranger (22), dans le cas contraire.

2. Procédé selon la revendication 1, pour lequel la grandeur dérivée des signaux de réception de micro-ondes (MWE) est la permittivité (epsilon) du produit.

3. Procédé selon la revendication 1 ou 2, lequel procédé comprend les étapes suivantes, lesquelles sont réalisées avant l'étape d'introduction des vibrations mécaniques dans le produit (1),
- Émission de signaux d'émission de micro-ondes (MWA) dans le produit (1) ;
- Réception des signaux de réception de micro-ondes (MWE) qui ont traversé le produit (1) ;
- Évaluation des signaux de réception de micro-ondes (MWE), la présence de l'objet (2) étant détectée au moyen des signaux de réception de micro-ondes (MWE) ou d'une grandeur (epsilon, ...) qui en est dérivée.

4. Procédé selon la revendication 3, pour lequel l'étape d'évaluation des signaux de réception de micro-ondes (MWE) et de détection de la présence de l'objet (2) dans le produit (1) comprend :
- Détermination d'une taille de l'objet (2).

5. Procédé selon la revendication 4, pour lequel une fréquence d'excitation (fan) des vibrations mécaniques introduites est choisie en fonction de la taille déterminée de l'objet (2).

6. Procédé selon la revendication 5,
pour lequel on détermine au moins à l'aide de la taille de l'objet (2) une fréquence de résonance (fres), fréquence de résonance (fres) à laquelle les bulles de gaz (21) sont excitées en vibrations résonantes, et
pour lequel on choisit comme fréquence d'excitation (fan) la fréquence de résonance (fres).

7. Procédé selon au moins l'une des revendications précédentes, pour lequel l'introduction des vibrations mécaniques dans le produit (1) est réalisée au moyen de l'introduction d'ondes ultrasonores (USW).

8. Système destiné à la distinction entre la présence d'un corps étranger ou d'une bulle de gaz dans un produit fluide (1) s'écoulant dans une conduite ou un réservoir, le système étant configuré pour mettre en œuvre le procédé selon au moins l'une des revendications 1 à 7, lequel système comprend:
- au moins une unité d'émission de micro-ondes (31), laquelle est conçue pour émettre des signaux d'émission de micro-ondes (MWA) dans le produit (1) ;
- au moins une unité de réception de micro-ondes (32), laquelle est conçue pour recevoir les signaux de réception de micro-ondes (MWE) qui ont traversé le produit (1),
- une unité d'émission d'ultrasons (4), laquelle est conçue pour introduire des ondes ultrasonores (USW) dans le produit (1),
- et une unité de régulation / d'évaluation (5), laquelle est conçue pour faire la différence entre la présence d'une bulle de gaz (21) ou d'un corps étranger (22) dans le produit (1) à l'aide de l'évaluation des signaux de réception des micro-ondes (MWE).
